(19) Europäisches Patentamt
European Patent Office
Office européen des brevets

(11) **EP 2 993 753 B1**

(12) **EUROPEAN PATENT SPECIFICATION**

(45) Date of publication and mention
of the grant of the patent:
**30.10.2019 Bulletin 2019/44**

(51) Int Cl.:
*H02J 3/38* (2006.01)    *H02P 29/02* (2016.01)
*H02M 7/48* (2007.01)    *H02M 1/32* (2007.01)

(21) Application number: **14183394.7**

(22) Date of filing: **03.09.2014**

(54) **Wind turbine generator with fault behavior like a synchronous generator**

Windturbinengenerator mit Fehlerverhalten wie ein Synchrongenerator

Générateur d'éolienne avec un comportement défectueux similaire à un générateur synchrone

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.03.2016 Bulletin 2016/10**

(73) Proprietor: **Siemens Aktiengesellschaft
80333 München (DE)**

(72) Inventor: **Nelson, Robert J.
Orlando, 32803 (US)**

(56) References cited:
**CN-A- 103 972 924    US-A1- 2005 122 083**

- QING-CHANG ZHONG ET AL: "Synchronverters:
Inverters That Mimic Synchronous Generators",
IEEE TRANSACTIONS ON INDUSTRIAL
ELECTRONICS, IEEE SERVICE CENTER,
PISCATAWAY, NJ, USA, vol. 58, no. 4, 1 April 2011
(2011-04-01), pages 1259-1267, XP011350328,
ISSN: 0278-0046, DOI: 10.1109/TIE.2010.2048839

## Description

### Field of Invention

The present invention relates to the field of wind turbine generators, in particular to methods of controlling a wind turbine converter, wind turbine converters and wind turbines using such converters.

### Art Background

Systems for analyzing and handling faults in systems with synchronous generators sometimes rely on measurements of negative sequence current.

However, typical full converter wind turbines produce only positive sequence currents. Consequently, typical wind turbines provide no negative sequence current during unbalanced fault condition. Instead, they produce a negative sequence voltage that is intended to zero out the negative sequence current.

Accordingly, special fault analysis equipment is needed for wind turbine generators. This adds complexity to the installation of wind turbine generators.

QING-CHANG ZHONG ET AL: "Synchronverters: Inverters That Mimic Synchronous Generators", IEEE TRANS. ON INDUSTRIAL ELECTRONICS, PISCATAWAY, NJ, USA, vol. 58, no. 4, 1 April 2011, pages 1259-1267, XP011350328 relates to operation of an inverter in order to mimic a synchronous generator.

US 2005/122083 A1 relates to generators with current regulated inverters, including wind and water current turbines, and more particularly to variable speed wind turbines employing multi-phase generators using full power conversion systems with utility fault ride through capability.

CN 103 972 924 A relates to a low voltage ride-through control method of a permanent magnetic direct drive wind power system under unbalanced network voltage.

Therefore, there is a need for a way of using the same fault analysis and protective equipment for both synchronous generators and wind turbine generators.

### Summary of the Invention

This need may be met by the subject matter according to the independent claims. Advantageous embodiments of the present invention are described by the dependent claims.

According to a first aspect of the invention, there is provided a method of controlling a three-phase wind turbine converter for converting a DC voltage into AC voltages. The method comprises (a) detecting a fault, (b) determining a positive sequence fault current, (c) determining whether the fault is a balanced fault or an unbalanced fault, and (d) if the fault is not a balanced fault, i.e. the fault is a close-in unbalanced fault, controlling the converter to: (d1) have an apparent negative sequence impedance that is substantially equal to its apparent positive sequence impedance, (d2) generate a negative sequence current that is substantially equal to the negative of the positive sequence fault current, and (d3) generate a negative sequence voltage equal to the product of the negative sequence impedance and the negative sequence current.

This aspect of the invention is based on the idea that the converter is controlled to mimic the behavior of a synchronous generator in case of an unbalanced fault. This is achieved by having the converter controls emulate a negative sequence impedance to be substantially equal to the emulated positive sequence impedance when an unbalanced fault is detected.

In the present context, the term "converter" may in particular denote any kind of converter for converting a DC input voltage (e.g. coming from the AC/DC converter of a wind turbine generator) into AC voltages, e.g. 3-phase AC voltages. In particular, the converter may be a constant frequency PWM converter, a variable frequency converter, a multi-level converter or any other converter that those familiar with the state of the art will be familiar with.

In the present context, the term "balanced fault" may in particular denote a fault that involves all phases, with equal fault current magnitudes in each phase. Balanced faults are normally characterized by the positive sequence characteristics of the system.

In the present context, the term "unbalanced fault" may in particular denote a fault that does not involve all phases or involves the phases to differing degrees. In a general, 3-phase system, some possible unbalanced faults are the single line-ground fault (SLGF), the line-line fault (LLF) and the line-line-ground fault (LLGF). However, in the case of wind turbines, the most relevant unbalanced fault is the LLF. This is due to the fact that wind turbines are typically connected to the power system via a grounded wye-delta transformer. This implies that the zero sequence impedance $(Z0)$ is an open circuit, so, from the wind turbine's perspective, Z0 and Zg (impedance between neutral and ground) approach a very large value. Consequently, there are effectively no SLGF or LLGF. Wind turbines do not contribute to an SLGF and LLGFs deteriorate to LLFs, since the zero sequence impedance approaches an infinite value.

The step of detecting a fault may comprise a comparison of the converter voltage with a predetermined threshold, such as 90% of the rated voltage. If the voltage drops below the predetermined threshold, this is taken of as an indication of a fault.

When it is determined that the detected fault is an unbalanced fault, the converter is controlled to set it's apparent negative sequence impedance (Z2) to be equal or at least close to the apparent positive sequence impedance (Z1), i.e. to produce negative sequence current and voltage having substantially the same ratio as the positive sequence current and voltage. Thereby, standard fault analysis systems originally developed to handle synchronous generators can be used to take care of the situation caused by the unbalanced fault. In particular, if a synchronous generator is replaced by a wind turbine comprising a DC/AC converter controlled in accordance with this method, the existing fault analysis system should remain essentially unchanged.

By controlling the converter to generate a negative sequence current corresponding to the negative of the positive sequence current, the converter will act essentially as a synchronous generator for near faults.

According to an embodiment of the invention, the step of determining a positive sequence fault current comprises (a) determining a converter positive sequence voltage, (b) determining a system positive sequence voltage, and (c) calculating the positive sequence fault current based on the converter positive sequence voltage, the system positive sequence voltage, and the positive sequence impedance.

More specifically, the positive sequence fault current (I1f) may be determined as $I1f = (V1conv - V1sys)/Z1$, where V1conv denotes the converter positive sequence voltage, V1sys denotes the system positive sequence voltage, and Z1 denotes the apparent positive sequence impedance.

According to a further embodiment of the invention, the method further comprises, if the fault is a balanced fault, controlling the converter to have an apparent negative sequence impedance that may be equal to or different from the apparent positive sequence impedance in a controlled manner.

In the case of a balanced fault, the fault current is determined by the positive sequence impedance, which consists of the apparent positive sequence impedance of the converter added appropriately to the system positive sequence impedance. In other words, in this case the converter is controlled to operate in the regular way as known in the art.

According to a further embodiment of the invention, the converter is controlled to have an apparent negative sequence impedance that has a programmed mathematical relationship to the apparent positive sequence impedance, in the same manner as demonstrated by synchronous turbine generator machines, where the positive sequence impedance increases with time from the subtransient to the transient to the synchronous reactance, while the apparent negative sequence impedance remains at a constant level approximating that of the subtransient impedance.

According to a further embodiment of the invention, the step of determining whether the fault is a balanced fault or an unbalanced fault comprises determining whether the negative and zero sequence voltages are substantially zero.

If both the zero and the negative sequence voltage are (at least close to) zero, the fault is determined to be balanced.

According to a second aspect of the invention, there is provided a computer program comprising computer executable instructions which, when executed by a computer processing unit, causes the computer to perform the method according to the first aspect or any of the above embodiments.

This aspect is based on the same idea as the first aspect described above and constitutes a computer program suitable for implementing the control method according to the first aspect in a controller for a converter.

According to a third aspect of the invention, there is provided a controller for a converter for converting a DC voltage into AC voltages, the controller comprising a processing unit adapted to execute the computer program according to the second aspect.

This aspect is based on the same idea as the first and second aspects described above and constitutes a controller adapted to perform the method of the first aspect by means of a computer program according to the second aspect.

According to a fourth aspect of the invention, there is provided a converter for converting a DC voltage into AC voltages, the converter comprising a controller according to the third aspect.

This aspect is based on the same idea as the three aforementioned aspects and specifically constitutes a converter with a controller designed to perform control in accordance with the present invention, such that the converter output can be monitored and analyzed by means of equipment and methods known from the field of synchronous generators.

According to a fifth aspect of the invention, there is provided a system comprising (a) a wind turbine, (b) a converter according to the fourth aspect, and (c) a synchronous generator fault analysis device.

This aspect provides a complete wind power generating system using the converter control method according to the present invention.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

Brief Description of the Drawing

Figure 1 shows a sequence model of a known converter.

Figure 2 shows a sequence model of a synchronous generator.

Figure 3 shows a flow chart of a method of controlling a converter in accordance with an embodiment of the present invention.

Detailed Description

The illustration in the drawing is schematic. It is noted that in different figures, similar or identical elements are provided with the same reference numerals or with reference numerals which differ only within the first digit.

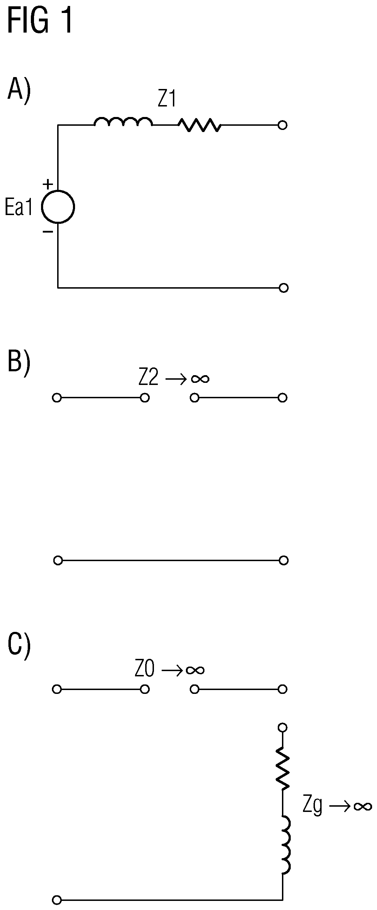

Figure 1 shows a sequence model of a known converter. More specifically, diagram a) shows the positive sequence equivalent circuit consisting of a voltage generator corresponding to the pre-fault positive sequence voltage and positive sequence impedance Z1 comprising an inductive element (reactance X) and a resistive element. Diagram b) shows the negative sequence equivalent circuit with a negative sequence impedance Z2 approaching infinity, i.e. an open circuit, and diagram c) shows the zero sequence equivalent circuit with both zero sequence impedance Z0 and impedance between neutral and ground Zg approaching infinity.

As can be seen from diagram b), the converter does not provide any negative sequence current as Z2 constitutes an open circuit.

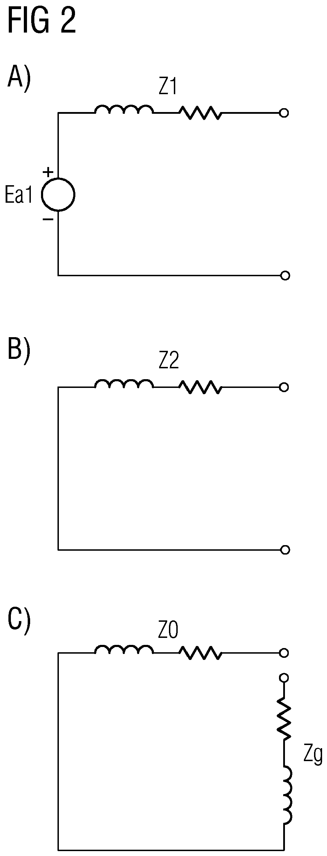

Figure 2 shows a sequence model of a synchronous generator. More specifically, diagram a) shows the positive sequence equivalent circuit consisting of a voltage generator corresponding to the pre-fault positive sequence voltage and positive sequence impedance Z1 comprising an inductive element (reactance X) and a resistive element. This circuit is identical to the one shown in diagram a) in Figure 1. Diagram b) shows the negative sequence equivalent circuit with finite negative sequence impedance Z2 (reactance and resistor). Different from diagram b) in Figure 1, a negative sequence current will flow in this case. Diagram c) shows the zero sequence equivalent circuit with finite zero sequence impedance Z0 and impedance between neutral and ground Zg.

Before continuing to the description of the control method according to the present invention, the fault behavior of a synchronous generator will be discussed in detail.

There are generally four basic types of faults in 3-phase power systems:

1. Three-phase (balanced) fault
2. Single line-ground fault (SLGF)
3. Line-line fault (LLF)
4. Line-line-ground fault (LLGF)

If a synchronous generator is supplying the fault current, the equations below would apply.

The 3-phase fault, or balanced fault, while rather trivial computationally, is generally the most severe fault and results in the highest short circuit current. The fault current from a synchronous generator is simply

$$If = Ea1 / (Z1),$$

where $Ea1$ = the pre-fault positive sequence voltage (line-neutral) and $Z1$ is the positive sequence impedance.

The remaining faults are unbalanced faults. That is, they do not involve all 3 phases.

The SLGF involves a short circuit from one of the three phases to ground. The fault current from an SLGF is

$$If = 3Ea1 / (Z1 + Z2 + Z0),$$

where $Z2$ is the negative sequence impedance and $Z0$ is the zero sequence impedance.

4

The LLF is simply a fault between two phases. The fault current from an LLF is

$$If = \sqrt{3}Ea1 / (Z1 + Z2).$$

The LLGF is a fault between two phases and ground. The fault current is

$$If = \sqrt{3} * \sqrt{(1-Z2*Z0/(Z2+Z0)^2)} * Ea1 /$$
$$(Z1 + ((Z2)(Z0) / (Z0 + Z2))$$

Wind turbines are typically connected to the power system via a grounded wye-delta transformer. This implies that the zero sequence impedance is an open circuit, so, from the wind turbine's perspective, Z0 and Zg (impedance between neutral and ground) approaches infinite. Consequently, there is no SLGF or LLGF. Wind turbines do not contribute to an SLGF and LLGFs deteriorate to LLFs, since the zero sequence impedance approaches infinite.

Thus, for wind turbine systems there are only two applicable common types of fault, the balanced 3-phase fault and the LLF. There is no negative sequence participation in the balanced 3-phase fault (it is positive sequence only). The fault current contribution is If = (Ea1/Z1), so the fault current is strictly positive sequence, which is within the capability of the existing art. However, in the existing art, converters provide only a positive sequence current flow. Consequently, the principal fault of concern is the LLF.

In the existing state of the art, if an LLF occurs, there is no negative sequence current flow. Instead, the typical converter establishes a negative sequence voltage that equals (and opposes) the negative sequence fault voltage.

When a line-line fault occurs close to a synchronous generator between phases b and c of a 3-phase system (comprised of phases a, b, and c), the resulting current flow, when powered by a synchronous generator, is described by Ib = - Ic.

Consequently, the voltage generated by the converter is:
The positive and negative sequence fault voltages are:
E1f = Ea1 - I1f x Z1 = (Ea1 x Z2)/(Z1 + Z2), where E1f is the positive sequence fault voltage and I1f is the positive sequence fault current.

E2f =- I2f x Z2 = (Ea1 x Z2)/(Z1 + Z2) = E1f, where E2f is the negative sequence fault voltage and I2f is the negative sequence fault current.

The converter generates the negative sequence fault voltage that cancels E2f, i.e., E2c = -E2f, where E2c is the converter negative sequence voltage and E2f is the fault negative sequence voltage. E2c +E2f = 0 so the negative sequence fault current, I2f, is zero.

Furthermore, passive systems have the characteristic that Z1 = Z2, so, for a synchronous generator system, I1f = - I2f.

But not all positive sequence current is fault current. Positive sequence current consists of load current plus fault current. So I1 = I1a + I1f, where I1a is the positive sequence load current (ideally the same as the scheduled positive sequence current).

All negative sequence current is fault current, so I2 = I2f.

In sum, the following three equations apply for a line-line fault close to a synchronous generator:

$$I2 = I2f = - I1f$$

$$Ea1 = E1a + E1f$$

$$E1f = E2f$$

In the second equation, E1a is the scheduled positive sequence voltage.

As will now be described in the following, it is possible for a converter to provide a fault response similar to that of a synchronous machine by solving these equations simultaneously.

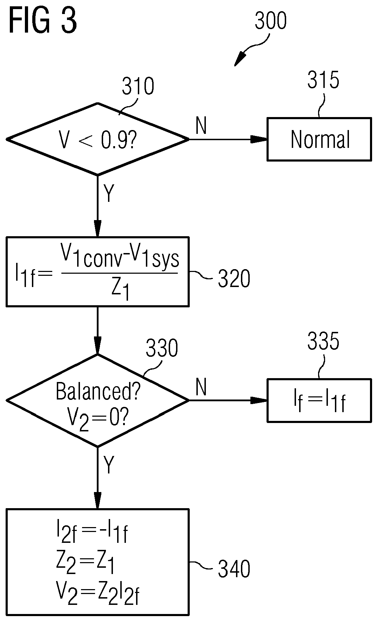

Figure 3 shows a flow chart of a method 300 of controlling a converter in accordance with an embodiment of the present invention.

The method 300 begins at step 310 by determining whether a fault has occurred, i.e. by comparing the output voltage with a predetermined threshold. If the output voltage is at least 90% of the expected voltage, normal operation is continued as indicated in block 315. However, if the output voltage is below 90% of the expected voltage, a fault is determined to have occurred and the method 300 continues to 320.

At 320, the positive sequence fault voltage I1f is determined as converter positive sequence voltage V1conv minus system positive sequence voltage V1sys divided by the positive sequence impedance Z1.

Then, the method 300 continues to step 330 where it is determined whether the detected fault is a balanced fault by checking if the negative sequence voltage is zero. If this is the case, the fault current If is set equal to the previously (in step 320) determined positive sequence fault current I1f in step 335 and the fault is handled as known in the art.

If it is determined in step 330 that the fault is not a balanced fault, i.e. the fault is an (e.g. a close-in) unbalanced fault, the method 300 continues to step 340. Here, a negative sequence fault current I2f is set equal to the negative of the previously determined positive sequence fault current, i.e. I2f = -I1f. Furthermore, the negative sequence impedance Z2 is set equal to the positive sequence impedance Z1, i.e. Z2=Z1, and the negative sequence voltage is set to equal the product of the negative sequence impedance Z2 and the negative sequence fault current I2f, i.e. V2 = Z2*I2f.

Thereby, the converter provides a negative sequence current in the same manner as a (high impedance) synchronous generator would have done in case of an unbalanced fault. Accordingly, a converter controlled in accordance with the method 300 will have a fault behavior similar to that of a synchronous generator and thus allow the use of conventional fault diagnosis and monitoring equipment for fault handling.

If at some point in time, it is expected that full converter wind turbines will be required to mimic the fault performance of synchronous generators, this requirement can be met by controlling the converters in accordance with the method 300 of the present invention, such that the negative sequence current produced during a low voltage condition is proportional to the system negative sequence voltage.

The present invention provides a control that will cause a full converter wind turbine to produce fault currents in the same general manner as synchronous generators, i.e., X0 (zero sequence reactance) very large, X2 = XI (X2 is the negative sequence reactance, X1 the positive sequence reactance). The principal benefit is that users will be able to analyze faults with their existing short circuit calculation software. Presently, wind turbine controls effectively provide very high values for both X2 and XO (e.g. several pu for X2 and over 50 pu for X0), and a much smaller value for XI (e.g. on the order of 1 pu). The present invention would allow settings of XI = X2 = on the order of 1 pu and X0 very large (e.g. around 50 pu). This will allow wind turbine generators (WTGs) to mimic performance of high-impedance synchronous generators during faults.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

**Claims**

1. A method of controlling a three-phase wind turbine converter for converting a DC voltage into AC voltages, the method comprising detecting (310) a fault,
   determining (320) a positive sequence fault current (I1f),
   determining (330) whether the fault is a balanced fault or an unbalanced fault, and
   if the fault is not a balanced fault, i.e. the fault is a close-in unbalanced fault, controlling (340) the converter to:

   have an apparent negative sequence impedance (Z2) equal to its apparent positive sequence impedance (Z1),
   generate a negative sequence current (I2f) equal to the negative of the positive sequence fault current (I1f), and
   generate a negative sequence voltage (V2) equal to the product of the negative sequence impedance (Z2) and the negative sequence current (I2f).

2. The method according to the preceding claim, wherein the step (320) of determining a positive sequence fault current (I1f) comprises
   determining a converter positive sequence voltage (V1conv),
   determining a system positive sequence voltage (V1sys), and
   calculating the positive sequence fault current (I1f) based on the converter positive sequence voltage (V1conv), the system positive sequence voltage (V1sys), and the positive sequence impedance (Z1).

3. The method according to the preceding claim, further comprising, if the fault is a balanced fault, controlling the converter to have an apparent negative sequence impedance (Z2) that is equal to or different from the apparent positive sequence impedance (Z1) in a controlled manner.

4. The method according to any of the preceding claims, wherein the step (330) of determining whether the fault is a balanced fault or an unbalanced fault comprises determining whether the zero sequence voltage (V0) and negative sequence voltage (V2) are zero.

5. A computer program comprising computer executable instructions which, when executed by a computer processing unit, causes the computer to perform the method according to any of the preceding claims.

6. A controller for a three-phase wind turbine converter for converting a DC voltage into AC voltages, the controller comprising a processing unit adapted to execute the computer program according to the preceding claim.

7. A three-phase wind turbine converter for converting a DC voltage into AC voltages, the converter comprising a controller according to the preceding claim.

8. A system comprising
   a wind turbine,
   a converter according to the preceding claim, and
   a synchronous generator fault analysis device.


**Patentansprüche**

1. Verfahren zum Steuern eines dreiphasigen Windturbinen-Umsetzers, um eine Gleichspannung in Wechselspannungen umzusetzen, wobei das Verfahren Folgendes umfasst:

   Detektieren (310) eines Fehlers,
   Bestimmen (320) eines Mit-Fehlerstroms (I1f),
   Bestimmen (330), ob der Fehler ein ausgeglichener Fehler oder ein unausgeglichener Fehler ist, und
   falls der Fehler kein ausgeglichener Fehler ist, d. h. falls der Fehler ein herannahender unausgeglichener Fehler ist, Steuern (340) des Umsetzers zum:

   Erhalten einer ersichtlichen Gegen-Impedanz (Z2), die gleich ihrer ersichtlichen Mit-Impedanz (Z1) ist,
   Erzeugen eines Gegen-Stroms (I2f), der gleich dem Negativen des Mit-Fehlerstroms (I1f) ist, und
   Erzeugen einer Gegen-Spannung (V2), die gleich dem Produkt aus der Gegen-Impedanz (Z2) und dem Gegen-Strom (I2f) ist.

2. Verfahren nach dem vorhergehenden Anspruch, wobei der Schritt (320) des Bestimmens eines Mit-Fehlerstroms (I1f) Folgendes umfasst:

   Bestimmen einer Mit-Spannung (V1conv) des Umsetzers,
   Bestimmen einer Mit-Spannung (V1sys) des Systems und
   Berechnen des Mit-Fehlerstroms (I1f) anhand der Mit-Spannung (V1conv) des Umsetzers, der Mit-Spannung (V1sys) des Systems und der Mit-Impedanz (Z1).

3. Verfahren nach dem vorhergehenden Anspruch, das ferner dann, wenn der Fehler ein ausgeglichener Fehler ist, das Steuern des Umsetzers zum Erhalten auf gesteuerte Weise einer ersichtlichen Gegen-Impedanz (Z2), die gleich oder verschieden von der ersichtlichen Mit-Impedanz (Z1) ist, umfasst.

4. Verfahren nach einem der vorhergehenden Ansprüche, wobei der Schritt (330) des Bestimmens, ob der Fehler ein ausgeglichener Fehler oder ein unausgeglichener Fehler ist, das Bestimmen, ob die Null-Spannung (V0) und die Gegen-Spannung (V2) jeweils null sind.

5. Computerprogramm, das computerausführbare Befehle enthält, die dann, wenn sie durch eine Computerverarbeitungseinheit ausgeführt werden, den Computer veranlassen, das Verfahren nach einem der vorhergehenden Ansprüche auszuführen.

6. Steuereinheit für einen dreiphasigen Windturbinen-Umsetzer zum Umsetzen einer Gleichspannung in Wechselspannungen, wobei die Steuereinheit eine Verarbeitungseinheit enthält, die dafür ausgelegt ist, das Computerprogramm nach den vorhergehenden Anspruch auszuführen.

7. Dreiphasiger Windturbinen-Umsetzer zum Umsetzen einer Gleichspannung in Wechselspannungen, wobei der Umsetzer eine Steuereinheit nach dem vorhergehenden Anspruch enthält.

8. System, das Folgendes umfasst:

   eine Windturbine,
   einen Umsetzer nach dem vorhergehenden Anspruch und
   eine Fehleranalysevorrichtung für synchronen Generator.

**Revendications**

1. Procédé de commande d'un onduleur triphasé d'éolienne pour transformer une tension en courant continu en des tensions en courant alternatif, le procédé comprenant
   détecter (310) un défaut,
   déterminer (320) un courant (I1f) de défaut de séquence positive,
   déterminer (330) si le défaut est un défaut équilibré ou un défaut déséquilibré, et
   si le défaut n'est pas un défaut équilibré, c'est-à-dire si le défaut est un défaut déséquilibré close-in, commander (340) l'onduleur pour :
   avoir une impédance (Z2) apparente de séquence négative égale à son impédance (Z1) apparente de séquence positive,
   produire un courant (I2f) de séquence négative égal au négatif du courant (I1f) de défaut de séquence positive, et
   produire une tension (V2) de séquence négative égale au produit de l'impédance (Z2) de séquence négative par le courant (I2f) de séquence négative.

2. Procédé suivant la revendication précédente, dans lequel le stade (320) de détermination d'un courant (I1f) de défaut de séquence positive comprend
   déterminer une tension (V1conv) de séquence positive d'onduleur,
   déterminer une tension (V1sys) de séquence positive de système, et
   calculer le courant (I1f) de défaut de séquence positive sur la base de la tension (V1conv) de séquence positive d'onduleur de la tension (V1sys) de séquence positive de système et de l'impédance (Z1) de séquence positive.

3. Procédé suivant la revendication précédentes, comprenant, en outre, si le défaut est un défaut équilibré, commander l'onduleur pour avoir une impédance (Z2) apparente de séquence négative, qui est égale à l'impédance (Z1) apparente de séquence positive ou qui en diffère d'une manière réglée.

4. Procédé suivant l'une quelconque de revendications précédentes, dans lequel le stade (330) de détermination si le défaut est un défaut équilibré ou un défaut déséquilibré comprend déterminer si la tension (V0) de séquence nulle et la tension (V2) de séquence négative sont nulles.

5. Programme d'ordinateur comprenant des instructions pouvant être exécutées par un ordinateur, qui, lorsqu'elles sont exécutées par une unité de traitement d'ordinateur, font que l'ordinateur effectue le procédé suivant l'une quelconque de revendications précédentes.

6. Unité de commande d'un onduleur triphasé d'éolienne pour transformer une tension en courant continu en des tensions en courant alternatif, l'unité de commande comprenant une unité de traitement conçue pour exécuter le programme d'ordinateur suivant la revendication précédente.

7. Onduleur triphasé d'éolienne pour transformer une tension en courant continu en des tensions en courant alternatif, l'onduleur comprenant une unité de commande suivant la revendication précédente.

8. Système comprenant
   une éolienne,
   un onduleur suivant la revendication précédente, et
   un dispositif d'analyse synchrone de défaut de générateur.

## FIG 1

A)

B)

C)

# FIG 2

A)

Z1

Ea1

+

−

B)

Z2

C)

Z0

Zg

## FIG 3

300

310

$$V < 0.9?$$

315

Normal

N

Y

320

$$I_{1f} = \frac{V_{1conv} - V_{1sys}}{Z_1}$$

330

Balanced?
$$V_2 = 0?$$

335

$$I_f = I_{1f}$$

N

Y

340

$$I_{2f} = -I_{1f}$$
$$Z_2 = Z_1$$
$$V_2 = Z_2 I_{2f}$$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005122083 A1

- CN 103972924 A

**Non-patent literature cited in the description**

- **QING-CHANG ZHONG et al.** Synchronverters: Inverters That Mimic Synchronous Generators. *IEEE TRANS. ON INDUSTRIAL ELECTRONICS,* 01 April 2011, vol. 58 (4), 1259-1267